# EUROPEAN PATENT APPLICATION

(11) **EP 2 179 870 A1**
(43) Date of publication of application: **28.04.2010**
(21) Application number: 09720181.8
(22) Date of filing: 12.03.2009
(51) Int. Cl.: B60C 15/04, B29D 30/48, D07B 1/06

(54) **ANNULAR, CONCENTRICALLY TWISTED BEAD CORD, PROCESS FOR PRODUCING THE SAME, AND VEHICLE TIRE**

(30) Priority: 14.03.2008 JP 2008066010; 04.03.2009 JP 2009051180
(71) Applicant: Sumitomo Electric Tochigi Co., Ltd., Utsunomiya-shi, Tochigi 321-3231 (JP)
(72) Inventor: OKAMOTO, Kenichi, Itami-shi Hyogo 664-0016 (JP); WAKAHARA, Hitoshi, Utsunomiya-shi Tochigi 321-3231 (JP)
(74) Representative: HOFFMANN EITLE
(86) International application number: PCT/JP2009/054811
(87) International publication number: WO 2009/113641

(57) **Abstract**

There are provided an annular concentric stranded bead cord which can realize a reduction in weight while ensuring its strength, a method for manufacturing the same and a vehicle tire.

The manufacturing method is a method for manufacturing an annular concentric stranded bead cord 2 by forming a sheath layer 13 by winding spirally a lateral wire 12 round an annular core 11. After the sheath layer 13 has been formed, the lateral wire 12 is annealed in a pressure-reduced inactive gaseous atmosphere with an annealing quantity which exceeds a heating quantity (temperature × time) which is necessary for vulcanization of a vehicle tire 1 with the annular concentric stranded bead cord embedded in a rubber of the vehicle tire 1 when building the same and is shaped so that "Diameter shaping ratio (%) = H/D × 100" becomes 20% or larger and 105% or smaller.

## Description

### TECHNICAL FIELD

The present invention relates to an annular concentric stranded bead cord which is embedded in a bead portion of a pneumatic tire, a method for manufacturing the same, and a vehicle tire.

### BACKGROUND ART

A bead cord which is embedded in a bead portion of a pneumatic tire generally has a sheath layer in which a lateral wire is wound round an annular core wire made of a soft steel wire, the lateral wire being made of a steel wire thinner than the core wire. However, in order to reduce the weight of a bead cord while ensuring the strength thereof, there are known a bead cord in which plated hard steel wires having the same diameter are stranded together in a plurality of layers (for example, refer to Patent Document 1) and a bead cord in which an annular core wire is made of a synthetic resin and a sheath wire made of a steel wire is wound spirally round a circumference of the annular core (for example, refer to Patent Document 2).

Patent Document 1: JP-A-5-163686
Patent Document 2: JP-A-11-321247

### DISCLOSURE OF THE INVENTION

### PROBLEM THAT THE INVENTION IS TO SOLVE

Incidentally, since the bead cord in Patent Document 1 has a construction in which hard steel wires having the same diameter are twisted together in a plurality of layers without an annular core wire, the shape is unstable and automated manufacturing is difficult. In addition, only a weight reduction something like one realized by the annular core wire being replaced by the thin hard steel wires has been able to be desired. Moreover, although ends of an annular core are made to butt up against each other for welding, in the case of hart steel wires, a welded portion tends to have a hard and brittle hardened construction, and because of this, an annealing treatment becomes necessary to prevent the breakage of such a welded portion, which requires a deburring operation to be carried out on the portion so treated.

In addition, in the bead cord in Patent Document 2, since the rigidity of the annular core wire made of synthetic resin is low, it becomes difficult to hold the shape of the annular core wire made of synthetic resin, and facilities for making bead cords by winding a sheath wire round such a resin annular core wire are difficult to be prepared. Moreover, since the rigidity of the bead cord itself is low, the handling properties thereof have also been not good.

Additionally, in an annular concentric stranded bead cord having a sheath layer consisting of metallic lateral wires, as with a wire rope which is not annular, a preliminary three-dimensional shaping based on the diameter and winding pitch of a core (an annular core) was not applied. This is because the following three drawbacks were expected to take place by the application of the preliminary three-dimensional shaping.
(1) In the event that the preliminarily shaped configuration does not coincide with the actual winding pitch completely, a deviation is gradually generated in the course of winding so as to produce a gap between the annular core wire and lateral wires, thereby causing a twisting error.
(2) In twisting for a non-annular cord (such as a wire rope), a plurality of lateral wires are twisted simultaneously round a single core. In the case of the annular concentric stranded bead cord, however, in addition to the fact that the core is annular, since one lateral wire is circumferentially wound round the one annular core (the one full circumference thereof), which is carried out in a number of times equal to a required number of lateral wires, in the event that a preliminary shaping is carried out, winding is made difficult to be carried out.
(3) Even in the event that for example, the shaping described under (1) above coincides with the actual winding pitching completely, the lateral wires are not fed smoothly from the reel which feeds the lateral wires towards the annular core, and this generates a change in winding tension, thereby affecting the formability of the bead cord.

In the non-annular stranded cord, the diameter shaping ratio of lateral wires is referred to as 95% or greater, so as to increase the strength utility ratio of lateral wires. However, as has been described above, in the annular concentric stranded bead cord, since the lateral wires were wound round the annular core without applying any preliminary shaping to thereby produce slight unsmoothness therein, the diameter shaping ratio of lateral wires was less than 10%. Because of this, the strength utility ratio as a cord was low, and when attempting to use the annular concentric stranded bead cord as a reinforcement material for a tire, an excessive safety ratio needed to be taken in, which increased the diameters of the annular core and lateral wires and disturbed the attempt to reduce the weight of the annular concentric stranded bead core.

The, an object of the invention is to provide an annular concentric stranded bead core which can realize a reduction in weight thereof while ensuring its strength, a method for manufacturing the same and a vehicle tire.

### MEANS FOR SOLVING THE PROBLEM

With a view to solving the problem, according to the invention, there is provided an annular concentric stranded bead cord including a single or a plurality of sheath layers by winding spirally a lateral wire round an annular core, **characterized in that** a diameter shaping ratio of the lateral wire is 20% or greater and 105% or smaller.

In this way, since the diameter shaping ratio of the lateral wire wound round the annular core is 20% or greater and 105% or smaller, the strength utility ratio of the lateral wire can be increased. By this, when attempting to use the annular concentric stranded bead cord as a reinforcement material for a tire, no excessive safety ratio needs to be taken in, and although the diameters of the annular core and the lateral wire are reduced, the strength of the annular concentric stranded bead cord can be ensured, and hence, a reduction in the weight thereof can be realized. Since rubber penetrates into a gap between the annular core and the lateral wire even though the diameter shaping ratio exceeds 100%, there is no such situation that the strength utility ratio of the annular core and the lateral wire is reduced largely, provided that the diameter shaping ratio is 105% or smaller.
In addition, letting the diameter of the annular concentric stranded bead cord (the annular core + a sectional diameter (wire diameter) of the sheath layer) be D and a wave height (including its own diameter) of the shaped lateral wire be H, the diameter shaping ratio is represented by "Diameter shaping ratio (%) = H/D × 100".

In addition, with a view to solving the problem, according to the invention, there is provided a manufacturing method of an annular concentric stranded bead cord for forming a single or a plurality of sheath layers by winding spirally a lateral wire round an annular core, **characterized in that** after the sheath layer has been formed, the annular concentric stranded bead cord is annealed and is shaped so that a diameter shaping ratio of the lateral wire becomes 20% or greater and 105% or smaller.

In this way, since after the sheath layer has been formed by winding the lateral wire round the annular core, the annular concentric stranded bead cord is annealed and is shaped so that the diameter shaping ratio of the lateral wire becomes 20% or greater and 105% or smaller, the strength utility ratio of the lateral wire can be increased. By this, when attempting to use the annular concentric stranded bead cord as a reinforcement material for a tire, no excessive safety ratio needs to be taken in, and although the diameters of the annular core and the lateral wire are reduced, the strength of the annular concentric stranded bead cord can be ensured, and hence, a reduction in the weight thereof can be realized. Since rubber penetrates into a gap between the annular core and the lateral wire even though the diameter shaping ratio exceeds 100%, there is no such situation that the strength utility ratio of the annular core and the lateral wire is reduced largely, provided that the diameter shaping ratio is 105% or smaller. In addition, since the shaping process is carried out after the sheath layer has been formed, the winding pitch at which the lateral wires are wound round the annular core can be set to any desired value so as to stabilize the winding tension, whereby the winding operation of the lateral wire can be carried out in a smooth fashion, thereby facilitating the manufacture of the annular concentric stranded bead cord.

The diameter shaping ratio of the lateral wire when the lateral wire is wound spirally round the annular core is preferably smaller than 20%. By this, the winding pitch at which the lateral wire is wound round the annular core can be set to any desired value so as to stabilize the winding tension. Because of this, the sheath layer forming operation can be carried out in a smooth fashion, thereby facilitating the manufacture of the annular concentric stranded bead cord.

The shaping process preferably involves an annealing which exceeds a heating quantity (temperature × time) which is necessary for vulcanization of a vehicle tire with the annular concentric stranded bead cord embedded in a rubber of the tire when building the same. By this, in addition to the increase in strength utility ratio by shaping, age hardening of the annular core and the lateral wire which make up the bead cord is promoted, whereby the effect of increasing the strength can easily be obtained.

In addition, when a brass plating treatment is applied to at least either of the annular core and the lateral wire, the shaping process preferably involves an annealing which is performed for 5 minutes or more and 120 minutes or less in a pressure-reduced inactive gaseous atmosphere at temperatures of 180°C or higher and 320°C or lower. In consideration of the melting point of zinc contained in brass, the annealing temperature in the shaping process is suitably 320°C or lower. In addition, since the heating quantity which is necessary for vulcanization of a tire when building the same is 170°C × 15 minutes even at a higher temperature end of heading conditions, in the case of the annealing temperature being 180°C or higher, an increase in strength due to age hardening can be expected. Additionally, in annealing the bead cord alone, since the volume to be heated is smaller than the volume to be heated when vulcanizing the tire for building the same, even though the annealing time of the bead cord is only 5 minutes, the bead cord can be annealed sufficiently and uniformly.

In addition, when a copper alloy or zinc plating treatment is not applied to the annular core and the lateral wires, the shaping process preferably involves an annealing which is performed for 5 minutes or more and 120 minutes or less in a pressure-reduced inactive gaseous atmosphere at temperatures of 180°C or higher and 380°C or lower. Although when the annealing temperature in the shaping process exceeds 350°C, a decreasing tendency is exhibited in the strength of the lateral wire itself, since the shaping ratio of the lateral wire increases as the temperature increases, a limit annealing temperature at which the strength utility ratio which is affected by both the characteristics is still kept from being reduced is on the order of 380°C. In addition, as has been described above, even though the annealing time of the bead cord is only 5 minutes, the bead cord can be annealed sufficiently and uniformly.

In addition, according to the invention, there is provided a vehicle tire **characterized in that** the annular concentric stranded bead cord of the invention or an annular concentric stranded bead cord manufactured by the annular concentric stranded bead cord manufacturing method of the invention is embedded therein.

In this way, since the annular concentric stranded bead cord in which the reduction in weight is realized while ensuring its strength is used, an ecological tire can be realized which is easy to be manufactured and whose weight is reduced.

### ADVANTAGE OF THE INVENTION

According to the invention, the annular concentric stranded bead cord which can realize a reduction in weight while ensuring its strength, the manufacturing method therefor and the vehicle tire can be provided.

### BRIEF DESCRIPTION OF THE DRAWINGS

[Fig. 1] A sectional view of a vehicle tire.
[Fig. 2] (a) is an overall view of a bead cord, and (b) is a perspective view showing part of the bead cord.
[Fig. 3] A conceptual diagram showing an annular concentric stranded bead cord manufacturing apparatus which moves an annular core in a pendulum-like fashion.
[Fig. 4] A conceptual diagram showing a state in which the apparatus shown in Fig. 3 is in a pendulum-like motion.
[Fig. 5] Schematic diagrams illustrating a diameter shaping ratio.
[Fig. 6] Diagrams showing a tensile test jig of an annular bead cord, of which (a) is a side view of the test jig, and (b) is a sectional view of the test jig.

### DESCRIPTION OF REFERENCE NUMERALS AND CHARACTERS

1 vehicle tire; 2 bead cord (annular concentric stranded bead cord); 11 annular core; 12 lateral wire; 13 sheath layer; D diameter of bead cord; H wave height of lateral wire after shaping

### BEST MODE FOR CARRYING OUT THE INVENTION

Hereinafter, an embodiment of an annular concentric stranded bead cord according to the invention and a vehicle tire employing the same cord will be described by reference to the drawings.

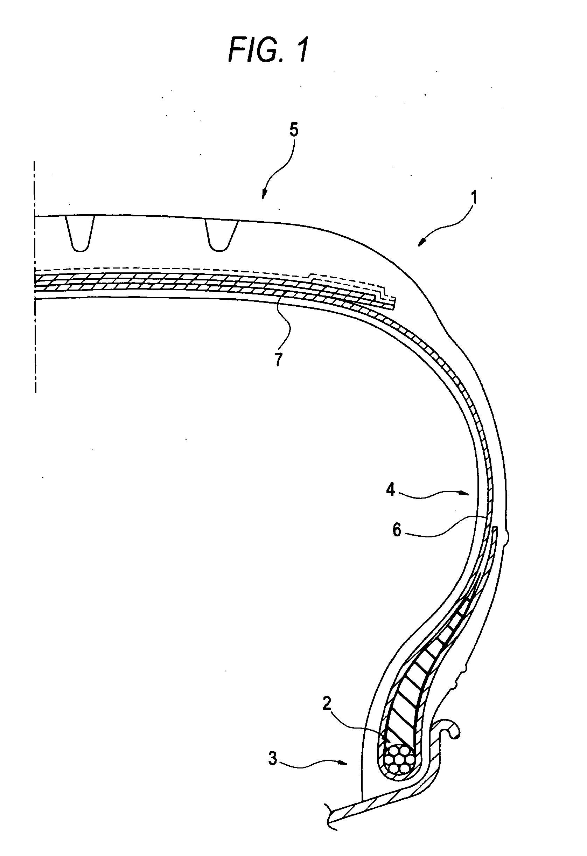

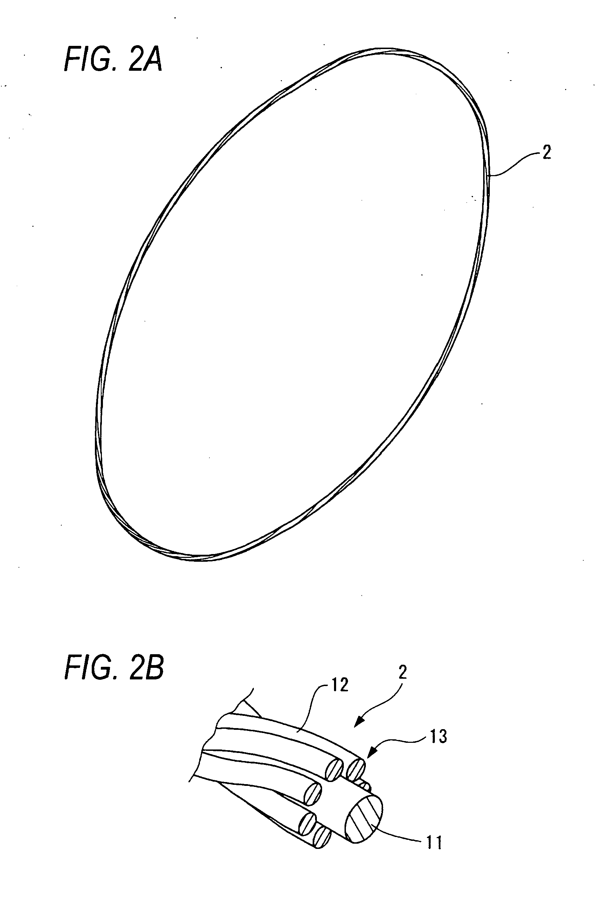

Fig. 1 is a sectional view of a vehicle tire, Fig. 2(a) is an overall view of an annular bead cord, and Fig. 2(b) is a perspective view showing part of the annular bead cord.

As is shown in Fig. 1, a vehicle tire 1 is a pneumatic tire for a passenger vehicle and includes bead portions 3 which are situated on both sides thereof and through which a bead cord (an annular concentric stranded bead cord) 2 passes, side wall portions 4 which individually extend radially outwards from the bead portions 3 and a tread portion 5 which connects together upper ends of the side wall portions 4.
In addition, a carcass 6 is extended between the bead portions 3, and a belt layer 7 is wound circumferentially on an outside of the carcass 6 and inwards of the tread portion 5.

As is shown in Figs. 2(a) and (b), the bead cord 2 which is passed through the bead portions 3 of the vehicle tire 1 is such that a sheath layer 13 made up of a plurality of (six in this embodiment) lateral wires 12 is provided round a circumference of an annular core 11, and by the lateral wires 12 being passed through an inside of a ring of the annular core 11 from an outside of the ring and being passed again through the inside of the ring from the outside of the ring, the lateral wires 12 are wound spirally round the annular core 11 at a predetermined winding pitch. Note that in this embodiment, the bead cord 2 is described as having the sheath layer 13 made up of a single layer of lateral wires.

The annular core 11 is such that a single wire is bent into an annular shape and end faces thereof are joined together by butt welding. In this case, the end faces of the annular core 11 can easily be joined together without increasing a diameter of the portion where the end faces of the wire of the annular core 11 are joined together.

The annular core 11 is made of an alloy steel wire, whose material is an alloy steel which includes 0.08 to 0.27 percent by mass of carbon (C), 0.30 to 2.00 percent by mass of silicone (Si), 0.50 to 2.00 percent by mass of manganese (Mn), and 0.20 to 2.00 percent by mass of chromium (Cr) and contains at least one of aluminum (Al), niobium (Nb), titanium (Ti) and vanadium (V) in a range of 0.001 to 0.100 percent by mass, with a remaining portion of the material properties made up of iron (Fe) and impurities which are mixed together inevitably. With this composition, the ductility reduction suppressing effect can be obtained at the weld between both the ends of the alloy steel wire when the alloy steel wire is formed annularly into the annular core 11.

In addition, the annular core 11 may be made of a medium carbon steel wire containing 0.28 to 0.56 percent by mass of carbon (C). Since the weldability of a joining portion is increased even in the event that the wire of such material properties is used for the annular core 11, a strength required for the annular core 11 can be ensured. In addition, a copper alloy (for example, brass) or zinc plating treatment may be applied to the surface of the annular core 11.

The lateral wires 12 are such as to be made of, for example, a high carbon steel wire containing 0.7 percent by mass of carbon (C). In addition, a copper alloy (for example, brass) or zinc plating treatment may be applied to the surface of the lateral wire 12.

The diameter (wire diameter) of the wire making up the annular core 11 is preferably equal to or larger than the diameter (wire diameter) of the wire making up the lateral wire 12, and the diameter of the wire making up the annular core 11 is 1.5 mm, and the diameter of the wire making up the lateral wire 12 is 1.4 mm.

Next, a method for manufacturing the annular concentric stranded bead cord will be described.

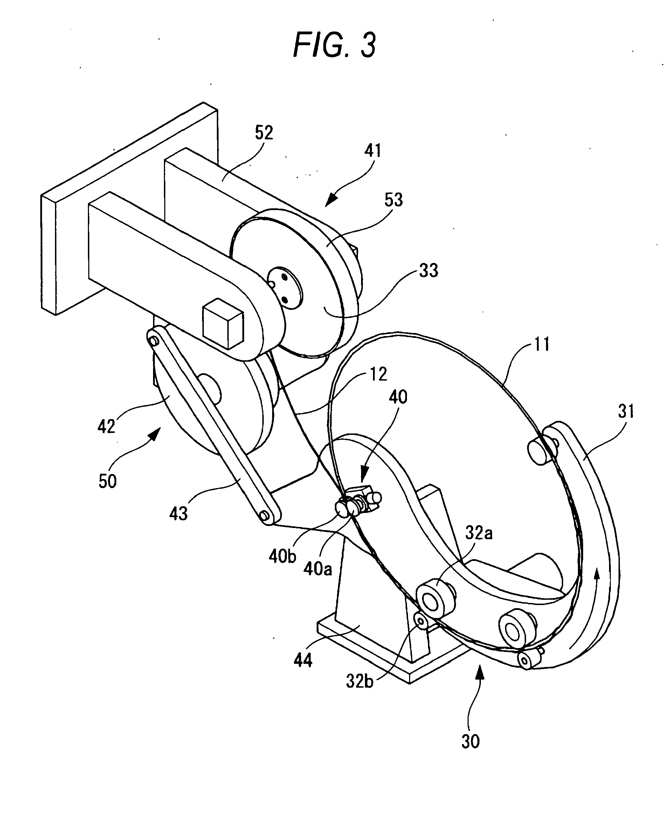

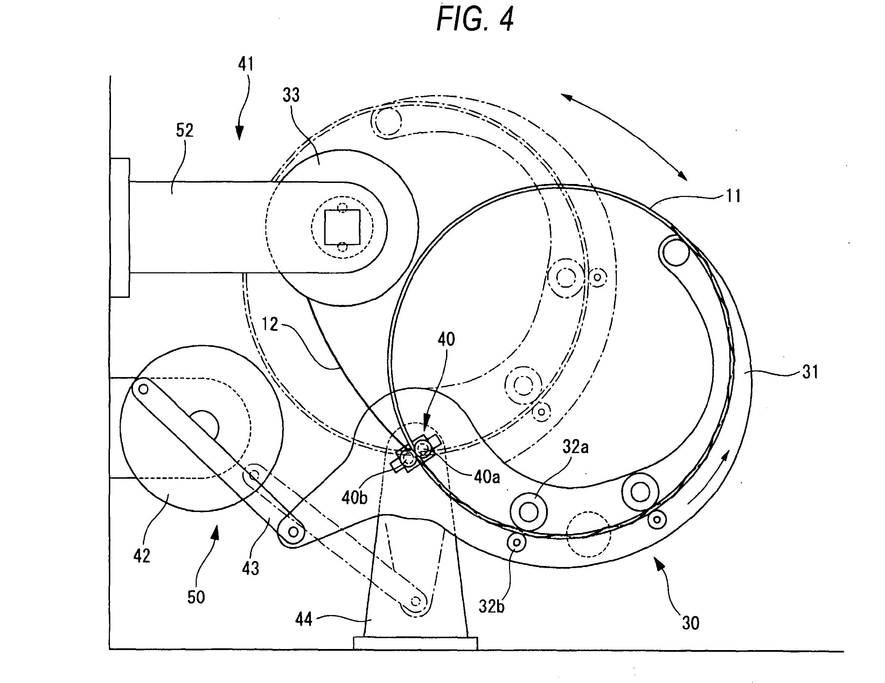

Fig. 3 is a conceptual diagram depicting an annular concentric stranded bead cord manufacturing apparatus which moves the annular core in a pendulum-like fashion, and Fig. 4 is a conceptual diagram illustrating a state in which the apparatus in Fig. 3 is in a pendulum motion.

The manufacturing apparatus shown in Figs. 3 and 4 has a driving unit 30 for rotating the annular core 11 in a circumferential direction and a supply portion 41 for supplying a lateral wire 12 wound round a reel 33 to a winding portion of the annular core 11.

The driving unit 30 is set in a bow-shaped holding arm 31 and has two pinch rollers 32a, 32b which are connected to a driving motor for rotating the annular core 11 in the circumferential direction.

A clamp unit 40 is provided on a side of the holding arm 31 which faces a lateral wire 12 to be supplied thereto. This clamp unit 40 is made up of two rollers 40a, 40b and prevents a lateral run-out of the annular core 11 so as to maintain the stable circumferential rotation of the annular core 11 and positions a winding point of the lateral wire 12 so as to obtain a high winding property. In addition, in this embodiment, the annular core 11 is positioned vertical and is caused to rotate in the circumferential direction while suppressing the lateral run-out thereof.

The holding arm 31 is set on a stand 44 in such a manner as to swing so as to perform a pendulum motion by a swing mechanism 50 made up of a rotary disc 42 and a crankshaft 43 about the clamp unit 40 as a fulcrum.

The annular core 11 held in the holding arm 31 swings in such a manner that the reel 33 is situated out of the ring of the annular core 11 at one end of a cyclic pendulum motion of the annular core 11 and is situated within the ring of the annular core 11 at the other end of the cyclic pendulum motion of the annular core 11.

A pair of front and rear opposed cassette stands 52 are placed at the supply portion 41 of the lateral wire 12 horizontally in such a manner as to be spaced a distance which does not interrupt the pendulum motion of the annular core 11 held in the holding arm 31 apart from each other. Reel transfer mechanisms are provided at distal ends of the stands 52 in such a manner as to confront each other with a surface of the annular core 11 held therebetween.

The supply portion 41 is made up of the reel 33 round which the lateral wire 12 is taken up and a cassette 53 whose diameter is slightly larger than an outside diameter of the reel 33 and which has a cylindrical outer circumferential wall which corresponds to at least an inner width of the reel. The reel 33 is accommodated rotatably within the cassette 53 in such a manner that the whole of a surface thereof on which the lateral wire 12 is wound is covered, whereby a so-called lateral wire cartridge is formed.

When a bead cord is manufactured by the use of the apparatus configured in the way described above, firstly, an initiating end of the lateral wire 12 is temporarily fastened to the annular core 11 which is installed in the holding arm 31 by an unvulcanized rubber sheet which has the same material properties as those of the vehicle tire 1.
Then, the reel 33 of the supply portion 41 is made to reciprocate in such a manner as to travel across a core plane which is a plane containing the annular core 11 in a predetermined position, and the annular core 11 is made to perform a pendulum motion about the clamp unit 40 as a fulcrum which constitutes the winding point of the lateral wire 12.

By these actions, the lateral wire 12 is wound spirally on the annular core 11 with a constant tension with a distance from the reel 33 to the lateral wire 12 maintained almost constant and without causing any looseness in the lateral wire 12 fed out of the reel 33 when the lateral wire 12 is wound round the annular core 11.
Then, when the lateral core 12 is wound round continuously a predetermined number of times, the initiating end of the lateral core 12 which is fastened temporarily to the annular core 11 is disconnected and the initiating end and a terminal end of the lateral wire 12 are fixedly connected to each other by a metallic sleeve.

On completion of this series of actions, a bead cord 2 is obtained which has a sheath layer 13 in which the lateral wire 12 is spirally wound round the circumference of the annular core 11.
In addition, the initiating end and the terminal end may be fixedly connected to each other by, for example, a sleeve made of brass or a light material (plastic, fluorine plastic or the like).

In addition, the lateral wire 12 wound round the reel 33 has a diameter shaping ratio of less than 20%. Namely, the diameter shaping ratio of the lateral wire 12 when the lateral wire 12 is wound spirally round the annular core 11 is less than 20%. By this, a winding pitch used when winding the lateral wire 12 round the annular core 11 can be set to any desired value, whereby the winding tension can be stabilized. Because of this, a sheath layer forming operation can be performed in a smooth fashion, thereby facilitating the manufacture of the bead cord.

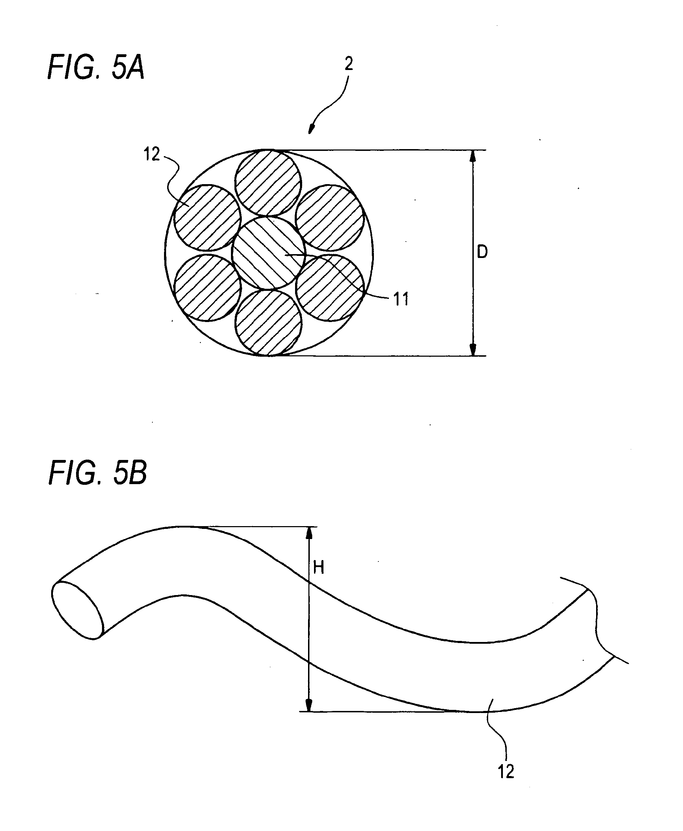

Additionally, the bead cord 2 formed in the way described above is annealed so as to apply a shaping treatment to the lateral wire 12. In this invention, the shaping treatment is applied so that the diameter shaping ratio of the lateral wire 12 becomes 20% or larger and 105% or smaller. Here, as is shown in Fig. 5, letting the diameter (wire diameter) of the bead cord 2 be D and a wave height (including its own diameter) of the shaped lateral wire 12 be H, the diameter shaping ratio is expressed by "Diameter shaping ratio (%) = H/D × 100". Since the shape of the lateral wire 12 is held in the shape resulting when the lateral wire 12 is wound round the annular core 11 by the diameter shaping ratio being made to be 20% or larger and preferably 50% or larger, the strength utility ratio of the lateral wire 12 can be increased. In addition, within a range in which the diameter shaping ratio does not surpass 100%, the strength utility ratio is increased as the diameter shaping ratio is increased. Because of this, the diameter shaping ratio is preferably not larger than 100%. However, since rubber penetrates into a gap between the annular core 11 and the lateral wire 12 even in the event that the diameter shaping ratio surpasses 100%, in the event that the diameter shaping ratio is not larger than 105%, the strength utility ratio is not reduced largely but can be maintained well.

Annealing for the shaping treatment is carried out under a pressure-reduced environment. The bead cord 2 formed in the way described above is heated by the use of, for example, a vacuum (pressure-reduced) heating furnace in which an inactive gas such as helium or argon can be supplied into a heating space inside the heating furnace and discharged from the heating space. An inactive gas is supplied into the heading space of the heating furnace before the bead cord 2 is placed within the heating furnace, and the inactive gas is forced to be discharged from the heating space after the bead cord 2 has been placed within the heating furnace so as to produce a pressure-reduced state or a vacuum state within the heating furnace. In this state, the bead cord 2 is heated and a low temperature annealing treatment is applied to the lateral wire 12. By this, surface oxidation of the lateral wire 12 which adversely affects the adhesion with rubber can be prevented, whereby shaping can be carried out with the lateral wire 12 in the shape which results when the lateral wire 12 is wound round the annular core 11.

An annealing quantity (temperature × time) involved in a shaping process preferably surpasses a heating quantity (temperature × time) which is necessary for vulcanization of the vehicle tire 1 with the bead cord 2 embedded in rubber of the vehicle tire 1 when building the same. By this, age hardening of the lateral wire 12 is promoted so that the effect of increasing the strength of the lateral wire 12 can easily be obtained. In addition, since a heating quantity necessary to vulcanize a tire when building the same is 170°C × 15 minutes even at a high temperature end of heating conditions, in the case of the annealing temperature being 180°C or higher, an increase in strength due to age hardening can be expected.

When a brass plating treatment is applied to at least either of the annular core 11 and the lateral wire 12, an annealing quantity in the shaping process is referred to as heating that is carried out for a heating time of 5 minutes or longer and 120 minutes or shorter at temperatures of 180°C or higher and 320°C or lower. In the case of the brass plating being applied, the melting point (419.6°C) of zinc contained in brass is preferably taken into consideration, and the annealing temperature in the shaping process is suitably 320°C or lower.

In addition, when a copper alloy plating treatment such as a brass plating treatment or a zinc plating treatment is not applied to the annular core 11 and the lateral wire 12, an annealing quantity in the shaping process is referred to as heating that is carried out for a heating time of 5 minutes or longer and 120 minutes or shorter at temperatures of 180°C or higher and 380°C or lower. In the event that the heating temperature in the shaping process surpasses 350°C, although the strength of the lateral wire 12 exhibits a decreasing tendency due to the lateral wire 12 itself being softened, the shaping ratio of the lateral wire 12 increases as the temperature increases. Therefore, a limit heating temperature at which the strength utility ratio which is affected by both the characteristics is still kept from being reduced is on the order of 380°C.

In addition, compared with vulcanization carried out when building the tire, in heading the bead cord 2 alone, since the volume to be heated is sufficiently small, in the event that the annealing time in the shaping process is 5 minutes or longer, sufficient and uniform annealing can be implemented, regardless of application of brass plating.

In this way, with the bead cord 2 of this embodiment, since the diameter shaping ratio of the lateral wire 12 wound round the annular core 11 is 20% or larger and 105% or smaller, the strength utility ratio of the lateral wire 12 can be increased. By this, when the bead cord 2 is attempted to be used as a reinforcement member for the vehicle tire 1, an excessive safety ratio does not have to be taken in, and hence, even in the event that the diameters of the annular core 11 and the lateral wire 12 are made thin, the strength of the bead cord 2 can be ensured, thereby making it possible to reduce the weight thereof.

In addition, since the shaping process is performed after the sheath layer 13 has been formed, the winding pitch at which the lateral wire 12 is wound round the annular core 11 can be set to any desired value, so as to stabilize the winding tension, whereby the winding operation of the lateral wire 12 can be performed in a smooth fashion, thereby facilitating the manufacturing of the bead cord 2.

When embedding the bead cord 2 configured in the way described above in the vehicle tire 1, a rubber sheet to which a vulcanizing accelerator is added is affixed to the bead cord 2 so that the bead cord 2 is made into a rubberized bead cord. Then, the rubberized bead cord is built in bead portions 3 of a vehicle tire 1 which is in the form of an unvulcanized rubber composite material having a tire shape, and this unvulcanized rubber composite material is then put in a tire building machine. Thereafter, a building mold of the tire building machine is pressurized and vulcanized so as to complete a tire. In the case of the lateral wire 12 being plated, a sulfur component contained in the rubber sheet reacts with the plating on the lateral wire 12, whereby the lateral wire 12 is bonded to the rubber sheet.

In addition, the bead cord 2 and the rubber sheet may be bonded together with an adhesive for metal and rubber which is suitable for bonding metal and rubber together without addition of the vulcanizing accelerator to the rubber sheet. This is effective in a case where no plating is applied to the lateral wire 12, and as this occurs, the rubber sheet can be secured to the lateral wire 12 in an ensured fashion. As the adhesive for metal and rubber, for example, an adhesive marketed under Chemlok (a trade mark, made by Load Far East Inc.) can be used.

Since the vehicle tire 1 manufactured in the way described above employs the bead cord 2 in which the reduction in weight is realized while ensuring its strength, the manufacturing thereof can be facilitated, and a reduction in the weight thereof can also be realized, whereby the vehicle tire 1 can be made into an ecological tire which is friendly to the environment.

### EXAMPLES

Bead cords were actually prepared under various conditions, and diameter shaping ratios of lateral wires used, strength utility ratios and weight reduction ratios of the bead cords so prepared and wire surface conditions of the lateral wires were evaluated.

The construction of the bead cords prepared will be described below.
Annular core: Steel wire having a wire diameter of 1.5 mm (Medium carbon steel containing 0.52 percent by mass of carbon (C))
Lateral wire: Steel wire having a wire diameter of 1.4 mm (High carbon steel containing 0.82 percent by mass of carbon (C))
Strand construction: one annular core + six lateral wires
Annular core pitch circle (φ mm): 436.6 mm
Number of times of winding of lateral wire: 13 times/circumference (winding pitch of 105 mm)

The results of the evaluations are shown in Table 1.

**[Table 1]**

| | Brass plated or not brass plated | Annealing conditions | | Diameter shaping ratio (%) | Strength utility ratio (%) | Weight reduction ratio (%) | Surface condition of lateral wire |
|---|---|---|---|---|---|---|---|
| | | temperature (°C) | time (min) | | | | |
| Comparison Example 1 | brass plated | - | - | 5 | 78.0 | 0 | good |
| Comparison Example 2 | brass plated | 170 | 15 | 12 | 79.1 | 1 | good |
| Example 1 | brass plated | 180 | 30 | 21 | 81.1 | 4 | good |
| Example 2 | brass plated | 220 | 30 | 37 | 83.8 | 7 | good |
| Example 3 | brass plated | 280 | 30 | 53 | 85.0 | 9 | good |
| Example 4 | brass plated | 320 | 30 | 72 | 85.6 | 10 | good |
| Example 5 | brass plated | 360 | 30 | 88 | 86.2 | 11 | slightly wavy |
| Example 6 | brass plated | 360 | 5 | 71 | 85.7 | 10 | good |
| Example 7 | not brass plated | 180 | 60 | 29 | 82.4 | 6 | good |
| Example 8 | not brass plated | 220 | 60 | 43 | 84.7 | 9 | good |
| Example 9 | not brass plated | 280 | 60 | 58 | 86.3 | 11 | good |
| Example 10 | not brass plated | 320 | 60 | 77 | 86.8 | 11 | good |
| Example 11 | not brass plated | 360 | 60 | 92 | 86.6 | 11 | good |
| Example 12 | not brass plated | 400 | 60 | 97 | 85.4 | 9 | good |
| Comparison Example 3 | not brass plated | 440 | 60 | 106 | 79.8 | 2 | good |

The evaluation items in Table 1 were evaluated by the following methods.

### (1) Diameter Shaping Ratio (%) of Lateral Wire

Annular concentric stranded bead cords are cut to prepare samples which are 15 cm long. As this occurs, in the event that the annular bead cords are cut with no treatment applied thereto, the lateral wires tend to be untwisted loosely so as to be disconnected from the annular cores. Because of this, the annular bead cords are bound in advance of cutting with a binding wire or the like in a position lying in the vicinity of a cutting position, and thereafter, the annular bead cords are cut. Curvatures in the cut samples (annular curvatures in the bead cords) are slightly corrected so that the samples become linear, and thereafter, diameters D (refer to Fig. 5) of the straightened portions of the samples are measured by a micrometer exclusively used to measure a cord diameter.
Using the samples whose diameters D were measured, the binding wires which individually bind the samples are removed therefrom, and the six lateral wires are removed from the annular core of each sample under a condition in which no load is applied. As to the six lateral wires, they are cut, as required, to a length which enables the measurement of a wave height over three pitches. Then, in the single lateral wire, wave heights are measured based on a sample number n = 3 (that is, heights of waves of three pitches) by the use of a universal projector and an average value of the three measurements is referred to as the wave height of the lateral wire. The remaining five lateral wires are measured in the same manner, and an average value of the wave heights of the six lateral wires is referred to as a wave height H of the lateral wire of the bead cord (refer to Fig. 5).
A diameter shaping ratio is calculated using the diameter D and the wave height H which were obtained in the ways described above by the expression, "Direct shaping ratio (%) = H/D × 100".

### (2) Strength Utility Ratio (%) of Bead Cord

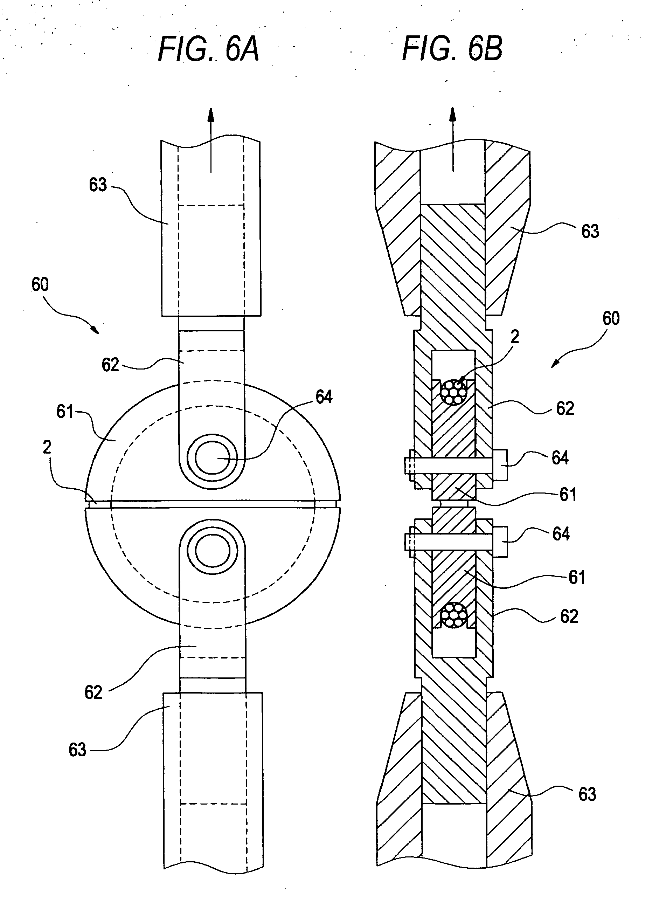

Tensile tests are performed in advance on strands of the annular cores and strands of the lateral wires by the use of a tensile testing machine based on a sample number n = 3, so as to calculate average cutting loads of the strands. A calculating formula is "Cutting load WO(kN) on strand = average cutting load of strands of the annular core + average cutting load of strands of the lateral wire × 6".
Tensile tests are performed on the annular bead cords based on a sample number n = 2 by the use of an exclusive jig 60 shown in Fig. 6, so as to calculate an average cutting load Wl (kN) of each of the bead cords.
Here, a tensile test method using the annular bead cord jig 60 shown in Fig. 6 will be described. The annular bead cord jig 60 is such that the bead cord 2 is made to be held by a pair of grooved semi-disc-shaped holding members 61 and drawing members 62 which are connected, respectively, to the corresponding holding members 61 via bolts 64 are pulled in directions in which the drawing members 62 are separated from each other (in vertical directions in Fig. 6) while being gripped on by chucks 63. For example, the position of the lower chuck 63 is fixed, and the upper chuck 63 is pulled upwards. A cutting load of the bead cord 2 can be measured by measuring a tensile load applied on the chuck 63.
A strength utility ratio η(%) is calculated from the cutting loads W0, W1 obtained in the ways described above based on a formula "Strength utility ratio η(%) = Wl/W0 × 100".

### (3) Weight Reduction Ratio (%) of Bead Cord

Since wire diameters of the annular cords and lateral wires of the respective examples can be reduced to such an extent that their strength utility ratios η are increased based on the strength utility ratio η of Comparison Example 1 in which no annealing treatment is applied, weight reduction ratios are calculated by a calculation formula "Reduction weight ratio (%) = (Strength utility ratio η of each example - Strength utility ratio η of Comparison Example 1)/ Strength utility ratio η of Comparison Example 1 × 100."

### (4) Surface Conditions of Lateral Wires

Changes in surface conditions of the lateral wires due to difference in annealing temperature are observed. In particular, in the case of the examples which are brass plated (Comparison Examples 1, 2, Examples 1 to 6), extents are observed to which wavy irregularities are generated in the surfaces of the lateral wires to prevent the generation of problems with adhesion to rubber.

As is seen from Table 1, in Comparison Example 1 in which no shaping treatment (annealing) was applied, the diameter shaping ratio of the lateral wire was 5%, which is small, and the strength utility ratio of the bead cord was 78.0%. In contrast with this, in the examples other than Comparison Example 1, it is seen that the diameter shaping ratios of the lateral wires were increased since annealing was carried out therein and that in association therewith, the strength utility ratios were also increased. However, in Comparison Example 2 where the annealing quantity was equal to the heating quantity (170°C × 15 minutes) which is necessary for vulcanization of a tire when building the same, the diameter shaping ratio of the lateral wire was less than 20%, and the strength utility ratio of the bead cord was less than 80%. In addition, in Comparison Example 3 where the annealing temperature exceeded 400°C, the diameter shaping ratio of the lateral wire exceeded 100% and the strength utility ratio of the bead cord was less than 80%. It is seen that the weight reduction ratios of Comparison Examples 2, 3 stayed at 2% or less.

In contrast with Comparison Examples 1 to 3, in Examples 1 to 12 where the annealing temperatures were made to be 180°C or higher and 360°C or lower for the plated cords and wires and 400°C or lower for the non-plated cords and wires so that the annealing quantity becomes equal to or larger than the heating quantity (170°C × 15 minutes) which is necessary for vulcanization of a tire when building the same, the diameter shaping ratios of all the lateral wires were 20% or larger and 105% or smaller, and the strength utility ratios of the bead cords were 80% or higher. By this, the weight reduction ratios of all the bead cords were increased by 4% or larger. In addition, it is seen that as the annealing quantity (temperature × time) in the shaping process became larger, the strength utility ratio and the weight reduction ratio which was calculated based thereon were increased higher. In addition, in Example 5 where the bead cord and the lateral wire were brass plated and the annealing temperature was 360°C, although the surface condition of the lateral wire was not such that elution took place therein, there was seen a phenomenon in which a soft portion was slightly recessed by a gas flow in the atmosphere within the furnace. However, the surface condition of the lateral wire was not such that there was caused a problem with overall adhesion of the wire to rubber.

Additionally, as other examples and comparison examples, bead cords were prepared with no brass plating applied thereto, the Chemlok (trade mark) was applied to the bead cords so prepared and crude rubber sheets were wound round the adhesive-applied bead cords, and the bead cords were pressurized and vulcanized. Then, as with those in the examples and comparison examples described above, the bead cords so prepared were evaluated with respect to diameter shaping ratios of lateral wires, strength utility ratios and weight reduction ratios of the bead cords and surface conditions of the lateral wires.
The construction of the bead cords was similar to that of Examples 1 to 12 and Comparison Examples 1 to 3.
In addition, as pressurizing and vulcanizing conditions, a pressure of 4kg/cm² and heating of 150°C × 30 minutes were adopted.

The results of the evaluations are shown in Table 2.

**[Table 2]**

| | Brass plated or not brass plated | Annealing conditions | | Diameter shaping ratio (%) | Strength utility ratio (%) | Weight reduction ratio (%) | Surface condition of lateral wire |
|---|---|---|---|---|---|---|---|
| | | temperature (°C) | time (min) | | | | |
| Comparison Example 4 | not brass plated | - | - | 7 | 78.2 | 0 | good |
| Comparison Example 5 | not brass plated | 170 | 15 | 11 | 79.0 | 1 | good |
| Example 13 | not brass plated | 180 | 30 | 21 | 81.1 | 4 | good |
| Example 14 | not brass plated | 220 | 30 | 40 | 83.4 | 7 | good |
| Example 15 | not brass plated | 280 | 30 | 56 | 84.7 | 8 | good |
| Example 16 | not brass plated | 320 | 30 | 81 | 85.9 | 10 | good |
| Example 17 | not brass plated | 360 | 30 | 90 | 86.2 | 10 | good |
| Example 18 | not brass plated | 400 | 30 | 98 | 84.0 | 7 | good |
| Example 19 | not brass plated | 420 | 30 | 104 | 81.3 | 4 | good |
| Comparison Example 6 | not brass plated | 440 | 30 | 107 | 79.6 | 2 | good |

Note that although evaluation items of Table 2 are diameter shaping ratio, weight reduction ratio and surface condition, which are similar to those of Table 1, evaluations were carried out on the bead cords from which the pressurized and vulcanized rubber was cut/deleted to be removed as much as possible.
Although the strength utility ratios (%) of the bead cords are almost similar to those in Table 1, evaluations were made on the rubbed bead cords.

As is seen from Table 2, in Comparison Example 4 where no shaping treatment (annealing) was applied, the diameter shaping ratio of the lateral wire was 7%, which was small, and the strength utility ratio of the bead cord was 78.2%. In contrast with this, in the examples other than Comparison Example 4, it is seen that the diameter shaping ratios of the lateral wires were increased since annealing was carried out therein and that in association therewith, the strength utility ratios thereof were also increased. However, in Comparison Example 2. where the annealing quantity was equal to the heating quantity (170°C × 15 minutes) which is necessary for vulcanization of a tire when building the same, the diameter shaping ratio of the lateral wire was less than 20%, and the strength utility ratio of the bead cord was less than 80%. In addition, in Comparison Example 6 where the annealing temperature was 440°C, the diameter shaping ratio exceeded 105% and the strength utility ratio of the bead cord was less than 80%. It is seen that the weight reduction ratios of Comparison Examples 5, 6 stayed at 2% or less.

In contrast with Comparison Examples 4 to 6, in Examples 13 to 19 where the annealing temperatures were made to be 180°C or higher and 420°C or lower so that the annealing quantity becomes equal to or larger than the heating quantity (170°C × 15 minutes) which is necessary for vulcanization of a tire when building the same, the diameter shaping ratios of all the lateral wires were 20% or larger and 105% or smaller, and the strength utility ratios of the bead cords were 80% or higher. By this, the weight reduction ratios of all the bead cords were increased by 4% or larger. In addition, it is seen that as the annealing quantity (temperature × time) in the shaping process became larger, the strength utility ratio and the weight reduction ratio were increased higher. Additionally, in Example 19 where the annealing temperature in the shaping process exceeded 400°C, the diameter shaping ratio of the lateral wire was 104%, and in comparison with Example 18 where the diameter shaping ratio of the lateral wire was 100%, although the strength utility ratio and the weight reduction ratios of Example 19 were slightly reduced from those of Example 18, both the ratios are still within the good evaluation range.

While the invention has been described in detail and with reference to the specific embodiment, it is obvious to those skilled in the art to which the invention pertains that various alterations or modifications can be made to the invention without departing from the spirit and scope thereof. This patent application is such as to be based on Japanese Patent Application (No. 2008-066010) filed on March 14, 2008 and Japanese Patent Application (No. 2009-051180) filed on March 4, 2009, and all the contents of those Japanese Patent Applications are to be incorporated herein by reference.

## Claims

1. An annular concentric stranded bead cord including a single or a plurality of sheath layers by winding spirally a lateral wire round an annular core, wherein
a diameter shaping ratio of the lateral wire is 20% or greater and 105% or smaller.

2. A manufacturing method of an annular concentric stranded bead cord for forming a single or a plurality of sheath layers by winding spirally a lateral wire round an annular core, wherein
after the sheath layer has been formed, the annular concentric stranded bead cord is annealed and is shaped so that a diameter shaping ratio of the lateral wire becomes 20% or greater and 105% or smaller.

3. The manufacturing method of the annular concentric stranded bead cord according to Claim 2, wherein
the diameter shaping ratio of the lateral wires when the lateral wire is wound spirally round the annular core is smaller than 20%.

4. The manufacturing method of the annular concentric stranded bead cord according to Claim 2 or 3, wherein
the shaping process involves an annealing which exceeds a heating quantity (temperature × time) which is necessary for vulcanization of a vehicle tire with the annular concentric stranded bead cord embedded in a rubber of the vehicle tire when building the same.

5. The manufacturing method of the annular concentric stranded bead cord according to Claim 3 or 4, wherein
a brass plating treatment is applied to at least either of the annular core and the lateral wire, and
the shaping process involves an annealing which is performed for 5 minutes or more and 120 minutes or less in a pressure-reduced inactive gaseous atmosphere at temperatures of 180°C or higher and 320°C or lower.

6. The manufacturing method of the annular concentric stranded bead cord according to Claim 3 or 4, wherein
a copper alloy or zinc plating treatment is not applied to the annular core and the lateral wire, and
the shaping process involves an annealing which is performed for 5 minutes or more and 120 minutes or less in a pressure-reduced inactive gaseous atmosphere at temperatures of 180°C or higher and 380°C or lower.

7. A vehicle tire wherein the annular concentric stranded bead cord according to Claim 1 or an annular concentric stranded bead cord manufactured by the manufacturing method of the annular concentric stranded bead cord according to any one of Claims 2 to 6 is embedded therein.
